# EUROPEAN PATENT SPECIFICATION

(11) **EP 2 929 213 B1**
(45) Date of publication and mention of the grant of the patent: **01.04.2026**
(21) Application number: 13860580.3
(22) Date of filing: 09.12.2013
(51) Int. Cl.: F16H 7/10

(54) **ENDLESS DRIVE ARRANGEMENT**
ENDLOSANTRIEBSANORDNUNG
AGENCEMENT DE TENDEUR

(30) Priority: 07.12.2012 US 201261734443 P
(43) Date of publication of application: 14.10.2015
(73) Proprietor: Litens Automotive Partnership, Woodbridge, Ontario L4L 5T7 (CA)
(72) Inventor: WALTER, Ingo, 63584 Grundau (DE); FISCHER, Michael, 97778 Fellen (DE)
(74) Representative: Grünecker Patent- und Rechtsanwälte PartG mbB
(86) International application number: PCT/CA2013/001040
(87) International publication number: WO 2014/085917

(56) References cited:
- EP-A1- 2 385 272
- DE-A1- 102006 014 942
- DE-A1- 102008 014 325
- DE-A1- 4 243 451

## Description

### FIELD

This invention relates to a belt drive arrangement for a starter-generator unit which uses a V tensioner.

### BACKGROUND

An ever increasing number of engines having a starter-generator unit have been developed since the 1990s in order to improve fuel mileage. In such engines, the combustion process is stopped when the vehicle comes to rest, for example, at a stoplight. In this condition the starter-generator unit is operated as a starter motor to restart the engine. Once the engine is started, the starter-generator unit can be selectively operated as a generator to recharge the batteries.

The starter-generator unit is mechanically connected to the engine via an endless drive such as a belt or chain. The endless drive member is subject to tension fluctuations, particularly as the starter-generator unit shifts its function between starter and generator, in which case the tight side and slack side of the endless drive reverses. The endless drive tensioning system must handle this and other tension fluctuations that occur whilst the engine is operating.

Various dual arm tensioners are known in the art, example of which are found in publication numbers DE 102 53 450 A1; EP 1 464 871 A1; US 2004/0171448 A1; EP 1 122 464 A1; and DE 42 43 451 A1. EP 2 385 272 A1 discloses a tensioner for an endless drive with a first tensioner arm and a second tensioner arm, wherein the first and second tensioner arms are pivotable about one common pivot axis and biased towards each other. A further tensioner is described in DE102008014325A1.

However, a tensioner disclosed herein seeks to provide a more robust solution to extend the operating life of such tensioners.

### SUMMARY

According to the invention, an endless drive arrangement is provided having the features as defined in claim 1. A further embodiment is provided in the dependent claim.

In an aspect, a tensioner for tensioning an endless drive member is provided, inter alia comprising a base that is mountable to a stationary structure. The base defines a tensioner arm pivot axis. The tensioner further comprises first and second tensioner arms which are pivotably mounted to the base and which are each pivotable about the tensioner arm pivot axis. A first bushing arrangement supports rotational movement of the first tensioner arm about the axis, and a second bushing arrangement that supports rotational movement of the second tensioner arm about the axis. A first pulley is rotatably connected to the first tensioner arm for rotation about a first pulley axis, and a second pulley rotatably connected to the second tensioner arm for rotation about a second pulley axis. The first and second pulleys are configured to engage the endless drive member. A pulley hub load generated by the endless drive member on the first pulley results in a radially directed bushing hub load at the first bushing arrangement. A tensioner arm biasing member has a first end that is engaged with the first tensioner arm and a second end that is engaged with the second tensioner arm so as to bias the first and second tensioner arms in first and second free arm directions. At least one axial preload member biases the first tensioner arm with an axial preload. The axial preload generates a radially directed counterforce in the first bushing arrangement that is at least approximately as great as the bushing hub load at at least one position of the first tensioner arm.

### BRIEF DESCRIPTION OF DRAWINGS

The foregoing and other aspects will be more readily appreciated having regard to the accompanying drawings, wherein:
Figure 1 is a top view of an embodiment of a tensioner having first and second tensioner arms
Figure 2 is a schematic view of the tensioner shown in Figure 1 in a belt drive system;
Figure 3 is an exploded perspective view of the tensioner shown in Figure 1;
Figure 4 is a sectional side view of the tensioner shown in Figure 1;
Figure 5 is another sectional side view of the tensioner shown in Figure 1 illustrating forces acting on the first tensioner arm; and
Figure 6 is another sectional side view of the tensioner shown in Figure 1 illustrating forces acting on the second tensioner arm.

### DETAILED DESCRIPTION OF EMBODIMENTS

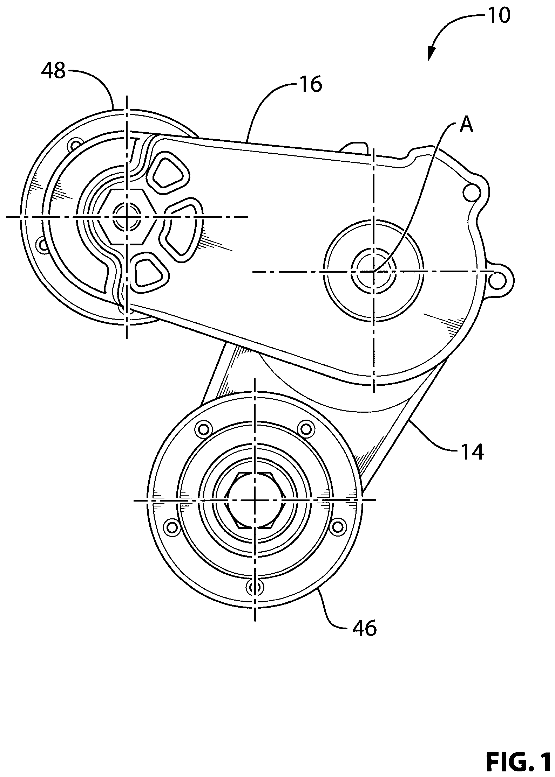

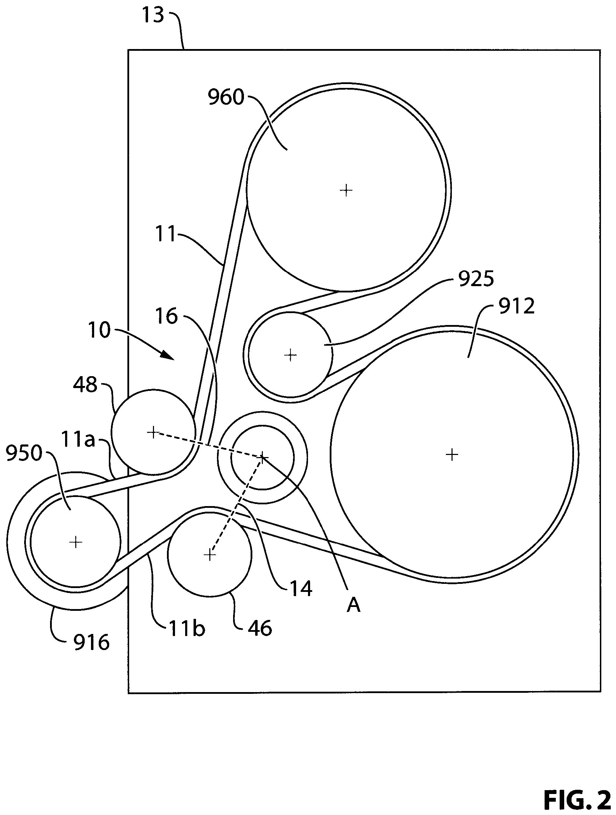

Figure 1 is a top view of an embodiment of a tensioner 10 usable for tensioning an endless drive member 11 (Figure 2). The endless drive member 11 may be for use on an engine 13 for a vehicle (not shown) and may be connected to a crankshaft pulley 912, a water pump pulley 960, a motor/generator unit pulley 950 for a motor/generator unit 916 (also referred to as an MGU 916), and an idler 925. The MGU 916 may be used for a number of purposes, including, for example, driving accessories such as the water pump or an air conditioning compressor (not shown) via the endless drive member 11 when the engine 13 is off temporarily, (e.g. when the vehicle is at a stoplight and the engine 13 is turned off to conserve fuel as occurs automatically in some hybrid vehicles). The MGU 916 could be used to provide a BAS drive capability to the engine 13 so that the engine 13 may be started by the MGU 916 through the endless drive member 11.

The endless drive member 11 may be a belt, or alternatively, it may be any other suitable type of endless drive member. In instances where the endless drive member 11 is a belt, it may be any suitable type of belt, such as a flat belt, a V belt, a poly-V belt, a timing belt. In instances where

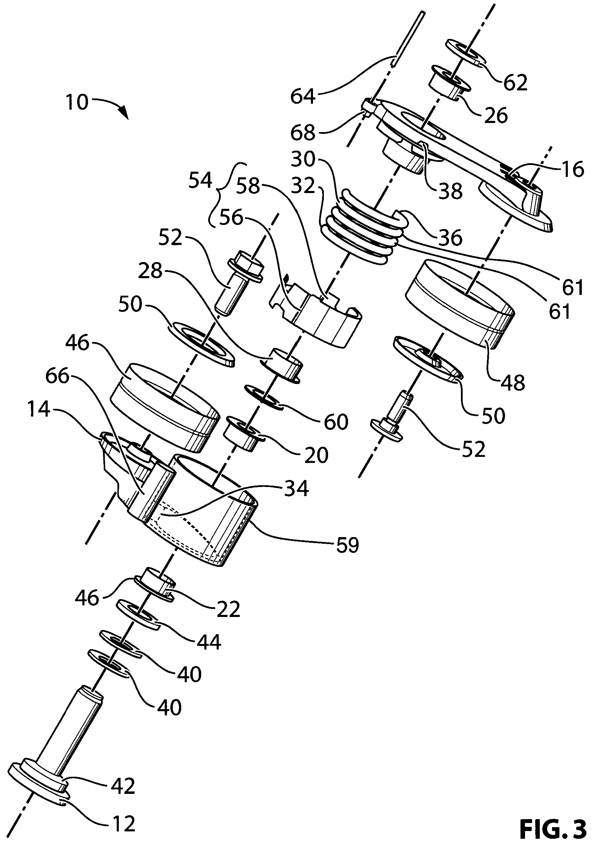

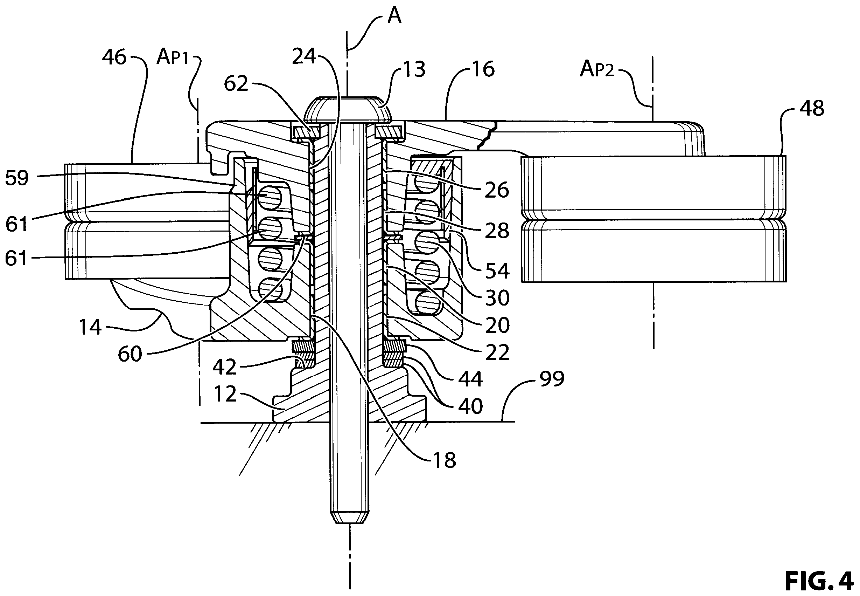

Referring to Figures 3 and 4, the tensioner 10 comprises a base 12 that is mountable to a stationary structure 99 such as an engine block. The base 12 may be in the form of a hollow shaft that defines a tensioner arm pivot axis A that has a mounting fastener (e.g. a threaded fastener) 13 that passes therethrough and that mounts into a mounting aperture (e.g. a threaded aperture) in the stationary structure 99. The tensioner 10 further includes a first tensioning arm 14 (which may be referred to as a lower tensioner arm) and a second tensioning arm 16 (which may be referred to as an upper tensioner arm). The first tensioning arm 14 is pivotably mounted to the base 12. In the example, shown the first tensioner arm 14 has a pass-through aperture 18 for mounting to the base 12. A first bushing arrangement that, in this example includes first and second lower bushings 20 and 22, extends in a radial space between the first arm aperture 18 and the outer surface of the base 12 to protect against metal-to-metal contact between the base 12 and the first arm 14. The bushings 20 and 22 may be made from any suitable material such as polyamide 4.6 or 6.6. The bushings 20 and 22 are shown to be spaced apart axially. It is alternatively possible for the bushings 20 and 22 to not be spaced apart axially. Furthermore, it is possible for the first bushing arrangement to comprise a different number of bushings, such as, for example, a single bushing.

The second tensioner arm 16 also includes a pass-through aperture 24 for pivotably mounting the second arm 16 to the base 12. A second bushing arrangement which may be similar to the first bushing arrangement (and which in this example includes first and second upper bushings 26 and 28), may be provided in the radial space between the aperture 24 and the outer surface of the base 12.

A tensioner arm biasing member 30 is provided and has a first end 32 that is engaged with a drive face 34 on the first tensioner arm 14 and a second end 36 that is engaged with a second drive face 38 on the second tensioner arm 16 so as to bias the first and second arms in respective first and second free arm directions into the belt 11. The free arm direction is the direction that the tensioner arm 14 or 16 would be moved in by the biasing member 30 if there were no belt present to resist the arm's movement. By contrast, the load stop direction is the direction the arm 16 would be moved in in if the belt tension were sufficiently high to overcome the biasing force of the biasing member 30. In general the free arm direction for a tensioner arm is a direction of movement that bring the tensioner arm into the belt, and the load stop direction is a direction of movement that brings the tensioner arm away from the belt. The tensioner arm biasing member 30 may be any suitable type of biasing member such as, for example, a torsion spring.

Each of the tensioner arms 14 and 16 has a pulley (shown at 46 and 48 respectively) rotationally mounted thereto for rotation about a pulley axis AP1 and AP2 respectively. Each pulley 46, 48 has a dust shield 50 that assists in protecting the bearing in the pulley from dust and debris. A mounting fastener (e.g. a threaded fastener) 52 is used to mount the pulley 46, 48 to the respective tensioner arm 14, 16.

As shown in Figure 2, each pulley 46, 48 is engaged with a respective belt span 11b, 11a of the belt 11. The belt spans 11a and 11b engaged by the pulleys 46, 48 are those that are on either side of the MGU pulley 950. The tensioner 10 operates on those spans 11a and 11b to ensure that belt tension is maintained in the belt spans 11a and 11b regardless of whether the MGU 916 is being operated as a motive device to drive the belt 11 (in which case the tension in belt span 11b will be relatively high and the belt tension in belt span 11a will be relatively low), or whether the belt 11 is being driven by the engine 13 and the MGU 916 is either off or is acting as a generator.

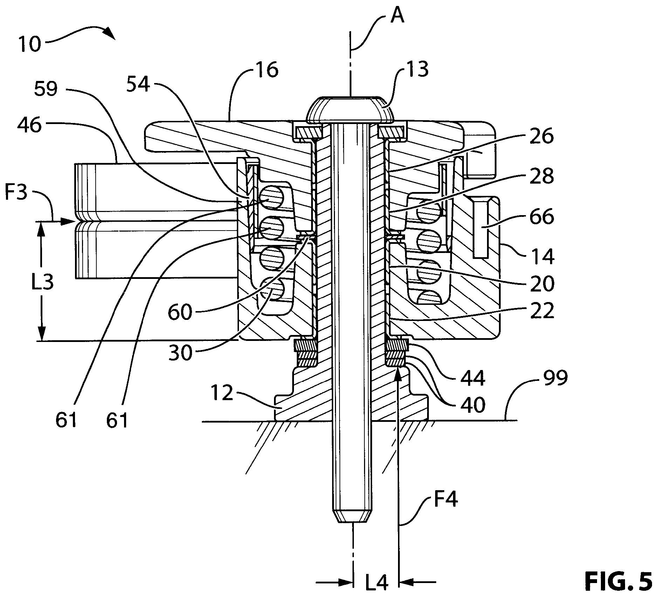

Referring to Figure 4, one or more (in this instance, two) axial preload members 40 are positioned on a shoulder 42 on the base 12, and are positioned to apply an axial biasing force on the lower tensioner arm 14, which may be referred to as an axial preload. The axial preload members 40 may be any suitable type of biasing members such as, for example, Belleville washers, which can generate large biasing forces and which are compact. The axial preload members 40 do not directly engage the arm 14; instead, a support member (e.g. a metallic disc) 44 is provided between the biasing members and the arm 14. Furthermore, the bushing 22 has a flange portion 46 that is also present between the axial preload members 40 and the arm 14, to prevent direct sliding movement between the arm 14 and the support member 44. The axial preload may be applied about the circumference of the lower arm 14, at an average radius r, as shown in Figure 5. The function of the axial preload members 40 is described further below.

A damping structure 54 that includes a polymeric (e.g. unfilled (non-reinforced) nylon) tensioner arm damping member 56 and a metallic (e.g. steel) sleeve 58 that holds the damping member 56 and protects the damping member 56 against damage from engagement with the torsion spring 30. The damping member 56 provides damping for the movement of the tensioner arm 16. The components of the tensioner arm assembly may be similar to the analogous components described in PCT publication no. WO2013/059929, the contents of which are incorporated herein in their entirety. As the torsion spring 30 expands, during movement of the tensioner arms 14 and 16 as a result of an overall increase in belt tension in the two belt spans 11a and 11b, the damping member 56 is driven against the inside wall of a cup portion 59 of the lower tensioner arm 14.

A slide disc shown at 60 is provided between a flange portion of the upper bushing 20 and a flange portion of the lower bushing 28, so as to support the rotation of the two tensioner arms 14 and 16 relative to one another. A front disc 62 is provided between the head of the fastener 13 and a flange portion of the upper bushing 26.

Referring to Figure 5, during operation, the belt 11 (Figure 2) applies a hub load shown at F3 to the first pulley 46, which results in a force on the first arm 14. This hub load F3 introduces a tipping force to the lower arm 14 that, if unaddressed can result in yaw in the lower arm 14. This can, in turn, result in noise and wear problems with the belt 11, and can furthermore cause uneven wear in the bushings 20 and 22. The uneven wear in the bushings 20 and 22 can lead to progressively increasing play between the arm 14 and the base 12 and over time, premature failure of the tensioner 10. To counteract the tipping force caused by the hub load F3, the axial preload members 40 are selected to apply a sufficiently high axial preload (shown at F4 in Figure 5) to the first arm 14 that a resulting radially directed counterforce applied to the bushings 20 and 22 from the axial preload is at least approximately as great as the bushing hub load applied to the bushings 20 and 22 as a result of the hub load F3. Because the axial preload F4 is applied about the entire circumference of the arm 14, the axial preload F4 is always positioned to counteract the bushing hub load that results from the pulley hub load F3.

In an example, the hub load F3 on the pulley 46 when the first tensioner arm 14 is at a particular position may be 395N. The bushing hub load that results from the pulley hub load F3 is determined as follows: BHL = F3 x L3 / BL, where BHL is the bushing hub load, F3 is the pulley hub load, L3 is the axial distance from the pulley hub load to the bottom of the bushings 20 and 22, and BL is the axial length of the bushings 20 and 22. In this example, F3 = 395N, L3 = 34.6mm and BL = 22mm. BHL in this example can be calculated to be 621N.

The counterforce applied to the bushings 20 and 22 that are the result of the axial preload members 40 is determined as follows: CF = F4 x L4 / (BL / 2), wherein CF is the counterforce, F4 is the axial preload, and L4 is the radius r of the axial preload. In a case where the axial preload members are selected to apply an axial preload F4 = 1000N at a radius r of 14.5mm, the resultant counterforce is 1318N. Because the counterforce exceeds the bushing hub load, no moment is introduced that causes uneven wear to the bushings 20 and 22. As a result, the bushings 20 and 22 wear evenly, which can result in a longer life for the tensioner 10. It will be noted that, while an example was described with the arm 14 at a particular position, the counterforce generated by the axial preload members 40 may be sufficiently high so that it is at least approximately as great as the bushing hub load throughout a range of positions of the tensioner arm 14 and preferably throughout substantially all of the positions that the arm 14 will move to during operation within the design conditions of the engine 13 (Figure 1).

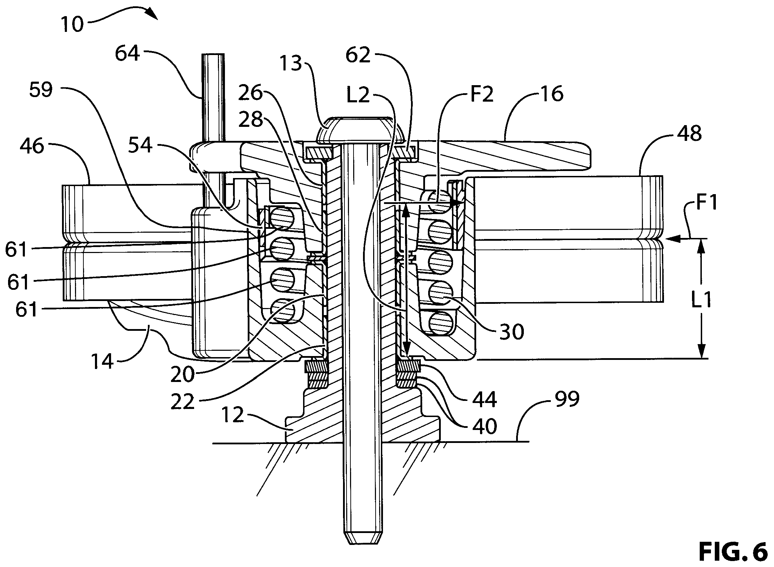

The mechanics of the upper tensioner arm 16 will now be described. The pulley hub load is shown at F1 and is in this example, 486N. The second end 34 of the spring 30 applies a force F2 on the tensioner arm 16. The second end 34 of the spring 30 may be oriented so that the force F2 is generally in the same direction as the force F1 (i.e. the forces are additive). These forces are resisted by a reaction force through the bushings 26 and 28. The centroid of the reaction force (LFR) may be determined by the formula: LFR = ((F1 x L1) + (F2 x L2)) / (F1 + F2), where L1 is the moment arm of the force F1, and L2 is the moment arm of the force F2. In an example, F1 may be 486N at a moment arm L1 of 34.6mm to a reference line. F2 is 866N at a moment arm of 41.4mm. In this example, LFR = 39mm, which as can be seen in Figure 6, is close to the center of the bushings 26 and 28, which is at 35.5mm from the reference line. Thus, the upper bushings 26 and 28, or the upper arm 16 overall, may be said to be in balance. This arrangement in relation to the upper arm 16 may be as described in PCT publication no WO2010/037232, the contents of which are incorporated herein by reference in their entirety. Providing a reaction force that is approximately centered axially on the bushings results in more even wear and a resulting longer life for the bushings 26 and 28.

As explained above, there is a force F2 that is shown to be exerted by the second end 36 of the spring 30 on the upper tensioner arm 16 in the diagram shown in Figure 6. However, as can be seen in Figure 5, there is no analogous force shown to be exerted by the first end 32 of the spring 30 on the lower tensioner arm 14. A reason there is no analogous force shown for the lower tensioner arm 14 is that the forces exerted by the spring 30 on the lower arm 14 essentially cancel out. More specifically, the coils (shown at 61) of the tensioner arm biasing member 30 expand radially proportionately to a tensioning force applied by the first and second ends 32 and 36 to the first and second tensioner arms 14 and 16. The damping structure 54 is driven to apply a frictional damping force to the first tensioner arm 14 (by engagement with the cup portion 59 of the first tensioner arm 14) that is proportional to an amount of radial expansion of the tensioner arm biasing member 30. As a result of this arrangement the tensioning force exerted by the first end 32 of the spring 30 on the lower arm 14 is substantially cancelled by a force exerted through the damping structure 54 on the cup portion 59 of the lower arm 14 from expansion of the upper coils 61 of the spring 30.

It will be noted that, while an example was described with the arm 16 at one particular position, the reaction force generated at the second bushing arrangement may be approximately centered axially along the second bushing arrangement throughout a range of positions of the tensioner arm 16.

Thus by providing both of the features described above in relation to increasing the operating life of the bushings 20 and 22, and 26 and 28, the operating life of the tensioner 10 may be longer than that of other V tensioners of the prior art.

For greater certainty, it will be noted that the benefits described above for the bushings 20 and 22, and for the bushings 26 and 28 would be applicable to first and second bushing arrangements that each only included a single bushing.

It will be noted that, in Figures 4 and 5, the lengths of the arrows representing forces F1, F2, F3 and F4 are not to be taken as being indicative of the magnitudes of the forces being represented.

An installation pin 64 may be provided which is insertable and removable from apertures 66 and 68 in the first and second tensioner arms 14 and 16 to hold the arms 14 and 16 in a certain position to facilitate installation of the belt 11. Once the belt 11 is installed, the installation pin (or more generally an arm locking member) can be removed, permitting the arms 14 and 16 to engage respective spans of the belt 11.

Those skilled in the art will appreciate that a variety of modifications may be made to the embodiments described herein without departing from the fair meaning of the accompanying claims.

## Claims

1. An endless drive arrangement, comprising
an endless drive member (11), and
a tensioner (10) tensioning the endless drive member (11), the tensioner (10) comprising:
a base (12) that is mountable to a stationary structure (99), wherein the base (12) defines a tensioner arm pivot axis (A);
a first tensioner arm (14) and a second tensioner arm (16), a first bushing arrangement (20, 22) that supports rotational movement of the first tensioner arm (14) about the axis, wherein the first bushing arrangement (20, 22) includes a first bushing (20) and a second bushing (22) that is or is not axially spaced from the first bushing (20);
a first pulley (46) rotatably connected to the first tensioner arm (14) for rotation about a first pulley axis (AP1), and a second pulley (48) rotatably connected to the second tensioner arm (16) for rotation about a second pulley axis (AP2), wherein the first and second pulleys (46, 48) are configured to engage the endless drive member (11), wherein a pulley hub load (F3) generated by the endless drive member (11) on the first pulley (46) results in a radially directed bushing hub load (BHL) at the first bushing arrangement (20, 22);
a tensioner arm biasing member (30) that has a first end (32) that is engaged with the first tensioner arm (14) and a second end (36) that is engaged with the second tensioner arm (16) so as to bias the first and second tensioner arms (14, 16) in first and second free arm directions into the endless drive member, wherein the tensioner arm biasing member (30) is a torsion spring having a plurality of coils; and
at least one axial preload member (40) that biases the first tensioner arm with an axial preload, wherein the at least one axial preload member (60) is at least one Belleville washer or a plurality of Belleville washers,
wherein
the first and second tensioner arms (14, 16) are pivotably mounted to the base (12) and are pivotable about the tensioner arm pivot axis (A); wherein the at least one axial preload member (40) is selected to apply a sufficiently high axial preload to the first tensioner arm (14) that the axial preload results in a radially directed counterforce (CF) in the first bushing arrangement that is at least as great as the bushing hub load (BHL) at at least one position of the first tensioner arm,
wherein the bushing hub load is determined according to the formula: BHL = F3 x L3 / BL, where BHL is the bushing hub load, F3 is the pulley hub load, L3 is the axial distance from the pulley hub load to an axial end of the first bushing arrangement, and BL is the axial length of the first bushing arrangement (20, 22),
and wherein the counterforce is determined according to the formula: CF = F4 x L4 / (BL / 2), wherein CF is the counterforce, F4 is the axial preload, and L4 is the radius of the axial preload, and
**characterized in that**
the tensioner arm biasing member (30) expands radially proportionately to a tensioning force applied by the first and second ends (32, 36) to the first and second tensioner arms (14, 16), wherein the tensioner (10) further comprises a damping structure (54) that is driven to apply a frictional damping force to the first tensioner arm (14) that is proportional to an amount of radial expansion of the tensioner arm biasing member (30).

2. An endless drive arrangement as claimed in claim 1, wherein a second bushing arrangement (26, 28) supports rotational movement of the second tensioner arm (16) about the axis (A), and wherein the second end (36) of the tensioner arm biasing member (30) is positioned such that a hub load on the second pulley (48), when added to the biasing force exerted by the second end (36) of the tensioner arm biasing member (30), results in a reaction force between the second bushing arrangement (26, 28) on the second tensioner arm (16) that is axially centered on the second bushing arrangement (26, 28), at at least one position of the second tensioner arm (16).

## Patentansprüche

1. Endlosantriebsanordnung, umfassend
ein endloses Antriebselement (11) und
einen Spanner (10), der das endlose Antriebselement (11) spannt, wobei der Spanner (10) umfasst:
eine Basis (12), die an einer stationären Struktur (99) montierbar ist, wobei die Basis (12) eine Spannerarm-Schwenkachse (A) definiert;
einen ersten Spannarm (14) und einen zweiten Spannarm (16), eine erste Buchsenanordnung (20, 22), die die Drehbewegung des ersten Spannarms (14) um die Achse unterstützt, wobei die erste Buchsenanordnung (20, 22) eine erste Buchse (20) und eine zweite Buchse (22) umfasst, die axial von der ersten Buchse (20) beabstandet ist oder nicht;
eine erste Riemenspannvorrichtung (46), die drehbar mit dem ersten Spannarm (14) verbunden ist, um sich um eine erste Riemenscheibenachse (AP1) zu drehen, und eine zweite Riemenscheibe (48), die drehbar mit dem zweiten Spannarm (16) verbunden ist, um sich um eine zweite Riemenscheibenachse (AP2) zu drehen, wobei die erste und die zweite Riemenscheibe (46, 48) so konfiguriert sind, dass sie mit dem endlosen Antriebselement (11) in Eingriff stehen, wobei eine von dem endlosen Antriebselement (11) auf die erste Riemenscheibe (46) ausgeübte Riemenscheibennabenlast (F3) zu einer radial gerichteten Buchsenhubelast (BHL) an der ersten Buchsenanordnung (20, 22) führt;
ein Spannarm-Vorspannelement (30), das ein erstes Ende (32) aufweist, das mit dem ersten Spannarm (14) in Eingriff steht, und ein zweites Ende (36), das mit dem zweiten Spannarm (16) in Eingriff steht, um den ersten und den zweiten Spannarm (14, 16) in eine erste und eine zweite freie Armrichtung in das endlose Antriebselement vorzuspannen, wobei das Spannarm-Vorspannelement (30) eine Torsionsfeder mit mehreren Windungen ist; und
mindestens ein Axialvorspannelement (40), das die erste Spannvorrichtung mit einer Axialvorspannung vorspannt, wobei das mindestens eine Axialvorspannelement (60) mindestens eine Belleville-Scheibe oder mehrere Belleville-Scheiben ist,
wobei
der erste und zweite Spannarm (14, 16) schwenkbar an der Basis (12) angebracht sind und um die Spannerarm-Schwenkachse (A) schwenkbar sind;
wobei das mindestens eine axiale Vorspannelement (40) so ausgewählt ist, dass es eine ausreichend hohe axiale Vorspannung auf den ersten Spannarm (14) ausübt, dass die axiale Vorspannung zu einer radial gerichteten Gegenkraft (CF) in der ersten Buchsenanordnung führt, die mindestens so groß ist wie die Buchsenhubbelastung (BHL) an mindestens einer Position des ersten Spannarms,
wobei die Buchsenhubbelastung gemäß der folgenden Formel bestimmt wird: BHL = F3 x L3 / BL, wobei BHL die Buchsenhubbelastung ist, F3 die Riemenscheibenhubbelastung ist, L3 der axiale Abstand von der Riemenscheibenhubbelastung zu einem axialen Ende der ersten Buchsenanordnung ist und BL die axiale Länge der ersten Buchsenanordnung (20, 22) ist,
und wobei die Gegenkraft gemäß der folgenden Formel bestimmt wird:
CF = F4 x L4 / (BL / 2), wobei CF die Gegenkraft ist, F4 die axiale Vorspannung ist und L4 der Radius der axialen Vorspannung ist, und
**dadurch gekennzeichnet, dass** sich das Vorspannelement (30) der Spannvorrichtung radial proportional zu einer Spannkraft ausdehnt, die durch das erste und zweite Ende (32, 36) auf den ersten und zweiten Spannarm (14, 16) ausgeübt wird, wobei die Spannvorrichtung (10) ferner eine Dämpfungsstruktur (54) umfasst, die so angetrieben wird, dass sie eine Reibungsdämpfungskraft auf den ersten Spannarm (14) ausübt, die proportional zum Ausmaß der radialen Ausdehnung des Spannarm-Vorspannelements (30) ist.

2. Endlosantriebsanordnung, nach Anspruch 1, wobei eine zweite Buchsenanordnung (26, 28) die Drehbewegung des zweiten Spannarms (16) um die Achse (A) unterstützt und wobei das zweite Ende (36) des Spannarm-Vorspannelements (30) so positioniert ist, dass eine Nabenlast auf der zweiten Riemenscheibe (48), wenn sie zu der vom zweiten Ende (36) der Spannvorrichtung-Vorspannelement (30) ausgeübten Vorspannkraft addiert wird, zu einer Reaktionskraft zwischen der zweiten Buchsenanordnung (26, 28) und der zweiten Spannvorrichtung (16) führt, die axial auf die zweite Buchsenanordnung (26, 28) zentriert ist, und zwar an mindestens einer Position der zweiten Spannvorrichtung (16) axial zentriert ist.

## Revendications

1. Agencement d'entraînement sans fin, comprenant
un élément d'entraînement sans fin (11), et
un tendeur (10) de tension de l'élément d'entraînement sans fin (11), le tendeur (10) comprenant :
une base (12) qui est installable sur une structure stationnaire (99), dans lequel la base (12) définit un axe de pivot de bras de tendeur (A) ;
un premier bras de tendeur (14) et un deuxième bras de tendeur (16), un premier agencement de bague (20, 22) qui soutient un mouvement de rotation du premier bras de tendeur (14) autour de l'axe, dans lequel le premier agencement de bague (20, 22) inclut une première bague (20) et une deuxième bague (22) qui est ou n'est pas éloignée axialement par espacement de la première bague (20) ;
une première poulie (46) connectée en rotation au premier bras de tendeur (14) pour une rotation autour d'un premier axe de poulie (AP1), et une deuxième poulie (48) connectée en rotation au deuxième bras de tendeur (16) pour une rotation autour d'un deuxième axe de poulie (AP2), dans lequel les première et deuxième poulies (46, 48) sont configurées pour se solidariser avec l'élément d'entraînement sans fin (11), dans lequel une charge de moyeu de poulie (F3) générée par l'élément d'entraînement sans fin (11) sur la première poulie (46) résulte en une charge de moyeu de bague (BHL) dirigée radialement au niveau du premier agencement de bague (20, 22) ;
un élément d'inclinaison de bras de tendeur (30) qui présente une première extrémité (32) qui est solidarisée avec le premier bras de tendeur (14), et une deuxième extrémité (36) qui est solidarisée avec le deuxième bras de tendeur (16) de sorte à incliner les premier et deuxième bras de tendeur (14, 16) dans des première et deuxième directions de bras libres dans le première élément d'entraînement sans fin, dans lequel le premier élément d'inclinaison de bras de tendeur (30) est un ressort de torsion présentant une pluralité de spirales ; et
au moins un élément de précharge axiale (60) qui incline le premier bras de tendeur avec une précharge axiale, dans lequel l'au moins un élément de précharge axiale (60) est au moins une rondelle ressort ou une pluralité de rondelles ressort,
dans lequel
les premier et deuxième bras de tendeur (14, 16) sont installés en pivot sur la base (12) et sont pivotables autour de l'axe de pivot de bras de tendeur (A) ; dans lequel l'au moins un élément de précharge axiale (40) est sélectionné pour appliquer une précharge axiale suffisamment élevée au premier bras de tendeur (14) de sorte que la précharge axiale résulte en une force antagoniste (CF) dirigée radialement dans le premier agencement de bague, qui soit au moins aussi importante que la charge de moyeu de bague (BHL) sur au moins une position du premier bras de tendeur,
dans lequel la charge de moyeu de bague est déterminée selon la formule : BHL = F3 x L3 / BL, où BHL est la charge de moyeu de bague, F3 est la charge de moyeu de poulie, L3 est la distance axiale de la charge de moyeu de poulie à une extrémité axiale du premier agencement de bague, et BL est la longueur axiale du premier agencement de bague (20, 22),
et dans lequel la force antagoniste est déterminée selon la formule : CF = F4 x L4 / (BL / 2), dans lequel CF est la force antagoniste, F4 est la précharge axiale, et L4 est le rayon de la précharge axiale, et
**caractérisé en ce que**
l'élément d'inclinaison de bras de tendeur (30) s'étend radialement proportionnellement à une force de tension appliquée par les première et deuxième extrémité (32, 36) aux premier et deuxième bras de tendeur (14, 16), dans lequel le tendeur (10) comprend en outre une structure d'amortissement (54) qui est entraînée pour appliquer une force d'amortissement par friction au premier bras de tendeur (14), qui est proportionnelle à une quantité d'extension radiale de l'élément d'inclinaison de bras de tendeur (30).

2. Agencement d'entraînement sans fin tel que revendiqué à la revendication **1,** dans lequel un deuxième agencement de bague (26, 28) soutient un mouvement de rotation du deuxième bras de tendeur (16) autour de l'axe (A), et dans lequel la deuxième extrémité (36) de l'élément d'inclinaison de bras de tendeur (30) est positionnée de sorte qu'une charge de moyeu sur la deuxième poulie (48), lorsqu'ajoutée à la force **d'inclinaison** exercée par la deuxième extrémité (36) de l'élément d'inclinaison de bras de tendeur (30), résulte en une force de réaction entre le deuxième agencement de bague (26, 28) sur le deuxième bras de tendeur (16) qui est axialement centrée sur le deuxième agencement de bague (26, 28), sur au moins une position du deuxième bras de tendeur (16).
